# EUROPEAN PATENT APPLICATION

(11) **EP 1 619 616 A1**
(43) Date of publication of application: **25.01.2006**
(21) Application number: 05076655.9
(22) Date of filing: 19.07.2005
(51) Int. Cl.: G06Q 10/00

(54) **A computer implemented method for implementing an ad-hoc action framework, a user terminal and a computer readable storage medium**

(30) Priority: 19.07.2004 EP 04017028
(71) Applicant: SAP AG, 69190 Walldorf (DE)
(72) Inventor: Beringer, Joerg, 60431 Frankfurt (DE)
(74) Representative: Winckels, Johannes Hubertus F.

(57) **Abstract**

A computer implemented method for implementing an ad-hoc coordination action framework, extending on a business process framework,
the method including:
implementing a plurality of ad-hoc coordination actions in a work context;
enabling the plurality of ad-hoc actions by state transition templates between roles participating at the work context, and
tracking the state transitions as a conversation thread in the work context.

## Description

### CROSS REFERENCE TO RELATED APPLICATIONS

This application claims the benefit of priority from EP application number 04017028.4, the entire content of which is incorporated herein be reference.

The invention relates to a computer implemented method for implementing an ad-hoc action framework on a business application, relating to a business situation, run on a computer, a user terminal and a computer readable storage medium.

Business applications running on programmable devices, such as computers, are known. These prior art applications aid users of the applications performing their activities within an enterprise. For example, a business application may guide a user through steps of a certain business process in a certain order, e.g. hiring a new employee. It is known to implement a business application using a plurality of services. For different steps in this process the business application may then provide the user with one or more services at the user interface, such as filling in and submitting a form to a database (e.g. with the new employees name address etc), and ordering items (e.g. a workplace for the new employee etc).
Typically, a service is implemented as a set of procedures or functions hosted on a computer server connected to the computer devices.
Business process models cover the way business is done formally, without considering informal processes, or more work group oriented work procedures that evolve as best practice of how to actually run the business. Besides dynamic workflows that may be adjustable to ad-hoc constraints or needs at runtime, there exists a level of ad-hoc people-to-people coordination on top of a process that manages the process on a meta level, solve problems, evaluate deliverables, etc. This ad-hoc coordination is typically done outside of the system using generic communication tools like email or phone. Such ad-hoc actions are neither trackable nor directly supported within the context of the business application.

It is desirable to provide a method for implementing a business application which considers informal processes. It is a further desirable to provide a method for implementing a business application which considers group oriented work procedures that evolve as best practices. Therefore, according to a first aspect of the invention, there is provided a computer implemented method for implementing an ad-hoc coordination action framework, extending on a business process framework,
the method including:
- providing a plurality of ad-hoc coordination actions as generic callable services in a work context;
- implementing the plurality of ad-hoc actions as templates defining the state transitions between roles participating at the work context, and
- enabling the work context to track the state transitions as a conversation thread.
   In this way, a flexible and dynamic approach to dealing with ad-hoc actions which form ad-hoc workflow, is provided. Further, users are helped in tracking ad-hoc coordination with participants. Further, within a context, users are supported in their ad-hoc actions.

In one embodiment, the ad-hoc action framework is combined, as an additional layer, with the business application. In this way, ad-hoc workflow is monitored with respect to the business application without interfering with the running of the business application.
In a further embodiment, the additional layer is modelled by a plurality of ad-hoc coordination actions on the basis of one or more state transitions models that define the ad-hoc interaction between a plurality of participants in a given context. Such , ad-hoc actions can be provided as a generic functionality in system environment such as a guided procedure within the business application. In this way, the concept of state-transition patterns are combined with the concept of work context. Further, a set of archetypical ad-hoc coordination actions may be enabled by state-transition models that define all possible state transition for this type of coordination act. These state-transition models may be encapsulated as actions that can be instantiated within a current work context. The actions may be long running. When launching such actions, they may be combined with existing contextual roles or may add a new participant to the context. Combinations of ad-hoc actions and context/process roles may be pre-enabled to reflect common work practice patterns, for example, negotiate with a supplier, clarify requirements with a requester. Within a work context such actions may automatically be tracked as pending conversations between two or more participants of a work context. The context framework may further associate such actions with the corresponding participant(s). For context tracking, views such as "list all pending actions" and "list thread of ad-hoc actions for one participant" may be offered. In this way, the ad-hoc workflow capability achieved is both flexible and dynamic.
According to a further aspect of the present invention, there is provided a user interface comprising means operable to perform the method of any of claims 1-18.

According to a further aspect of the present invention, there is provided a computer readable storage medium storing a program which when run on a computer controls the computer to perform the method of any of claims 1-18.

Specific embodiments of the invention are set forth in the dependent claims.

Further details, aspects and embodiments of the invention will be described, by way of example only, with reference to the attached drawings:
Figure 1 shows a further schematic drawing illustrating a business process, a guided procedure and an ad-hoc workflow according to an embodiment of the invention;
Figure 2 shows a schematic drawing illustrating the state transitions between two participants in a guided procedure;
Figure 3 shows a schematic drawing illustrating a state transition diagram for a sub-work flow;
Figure 4 shows a schematic drawing illustrating a further state transition diagram for an action work flow model with sub-work flows, including the ad-hoc work flow of Figure 1;
Figure 5 lists the candidates for ad-hoc coordination actions derived from the act-speech diagram shown in Figure 4;
Figure 6 shows a schematic drawing illustrating an action pattern including exception handling;
Figure 7 shows a schematic drawing illustrating the concept of an action in a business application.

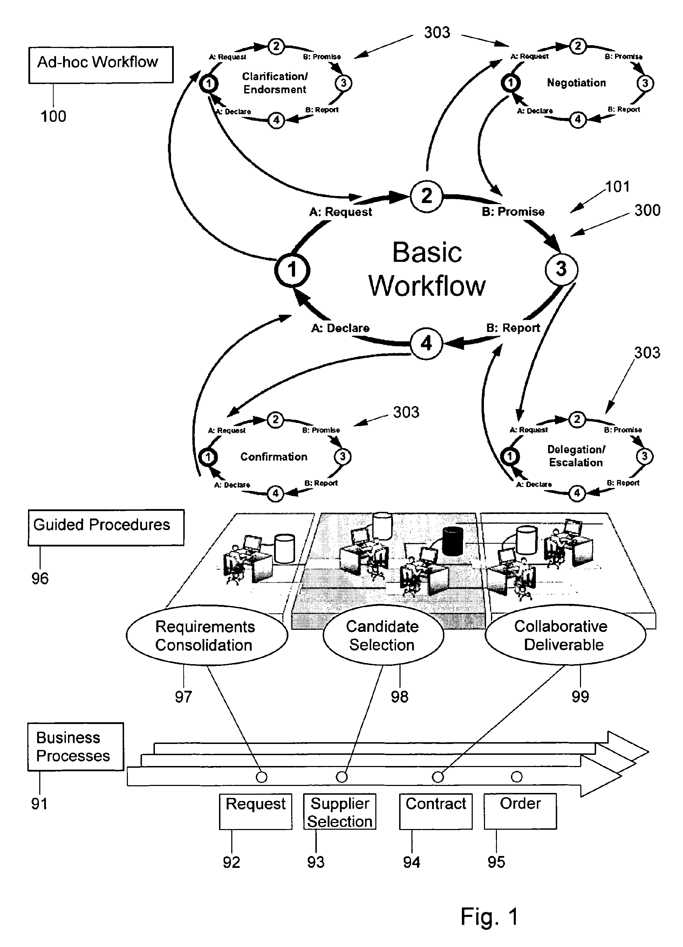

Figure 1 shows a schematic drawing illustrating a business process, a guided procedure and an ad-hoc workflow. In particular, Figure 1 illustrates a business process having a business process framework 91, having steps request 92, supplier selection 93, contract 94 and order 95. The business processes are hardwired in the system. Guided procedures 96 are provided to carry out the business processes. Guided procedures comprise dynamic work flow, as illustrated by the circles 79, 98, 99. Out of this formal business workflow, several informal and more work group oriented ad-hoc processes may arise. The ad-hoc workflow having an ad-hoc coordination action framework 100, which forms an additional layer which is disposed on top of the guided procedures. In particular, an ad-hoc coordination action framework 100, extends on the business process framework 91. In the example shown in Figure 1, the guided procedures include a requirements consolidation 97 which deals with the request 92, a candidate selection 98 which deals with the supplier selection 93 and a collaborative deliverable 99 which deals with the contract 94. Within each of the dynamic workflows, the need for ad-hoc coordination arises, which includes ad-hoc conversations with participants of a particular respective workflow context. Such coordination are handled by the proposed ad-hoc coordination actions, that are executed on top of the basic dynamic workflow 101 and include the execution of standard coordination actions 303. According to an embodiment of the present invention, an additional (third) layer is provided on top of the collaborative workflow, such as candidate selection etc. Such workflows are already more dynamic and sensitive to exceptions, such as approval and rejection, than fixed business workflow. They do not necessarily cover the actual exchanges, such as conversations, email, etc, between participants due to exceptions, such as lacking information and different opinions, etc. The exchanges, such as conversations, serve a particular purpose, for example, request and clarification, etc, and can be modelled by means of ad-hoc coordination actions in the form of state-action transitions patterns and related user interfaces. In particular, a plurality of ad-hoc actions may be enabled by state transition models between roles participating at the work context, respectively. Further, the ad-hoc coordination actions may be implemented as generically callable actions in the work context. In this way, ad-hoc actions are available and executable without affecting or redefining the process model at the dynamic workflow level. In particular, the plurality of ad-hoc coordination actions may be implemented as state transition templates or models between roles participating at the work context. Further, the state transitions may be tracked as a conversation thread in the work context. It is noted, that on the one hand, there exists a dynamic workflow level that also comprises business actions and perhaps, some collaborative actions, and on the other hand there exists the particular class of ad-hoc coordination actions, which link two or more roles in a given dynamic workflow context into an ad-hoc (meta) conversation about the business situation. According to an embodiment of the present invention, running ad-hoc coordination actions are being related to participants in a context. In this way, the callable actions relating to roles can be tracked as a conversation within the business process. For example, as part of a model, it may be possible that a supplier has a request for clarification. According to an embodiment of the invention, any role can have active coordination acts. This is in contrast to a conventional system, in which exceptions are predefined. According to embodiments of the present invention, ad-hoc workflow which does not fall under the predefined exceptions, may also be covered and tracked.

In particular, in a business process, informal work groups may progress a business process. In particular informal work groups contribute to the ad-hoc work flow 100 in Figure 1. A business process 91 may include the steps of receiving an invoice, getting approval to pay, sending the invoice to the accounting department, sending the invoice to the payment department and sending the invoice to the mail room. The systems design including the guided procedures for the system requires input/output and communication links with a variety of participants who may be part of the human process carried out by the informal group. For example, the human process for carrying out the business process 91 may include a secretary who asks for approval for the invoice from a manager. This part of the procedure requires an escalating action. The invoice is then sent to the accounting department, where further participants are involved. In the pay department, a further participant is involved, and finally the postman who delivers the payment.

In order to provide a guided procedure that can deal with the ad-hoc activity which arises as a result of informal work, the patterns in the informal work are identified. According to an embodiment of the invention, this is achieved by deriving an action definition for the actions involved in the informal work by modelling the state transitions for the information exchange between the participants. Dealing with ad-hoc work flow may also be referred to as exception handling. Further, the actions involved in the ad-hoc (or informal) work flow may also be referred to as exceptions. Exception handling may be implemented in the guided procedure in the following way: actions implement the core functionality of an agent (execution role). They include a specific internal exception handling for internal purposes. They may give rise to predefined exceptions to their environment and deliver status information (detect exception), support diagnosis of exception (state information and introspection, modelling standard behaviour, suggestion of possible causes), and offer exception handling capabilities. They may offer generalized exception handling support (retry, rollback, pause, etc), as well as action specific support which helps to build context sensitive exception handling strategies mapped to possible detect/reason patterns. According to an embodiment of the present invention, in the guided procedure implementation, the propagation of exceptions may be controlled in a generic way or by enhancing the guided procedure template design functionality. According to an embodiment of the invention, the execution of one or more of the plurality of ad-hoc actions freezes a work flow instance in the business process framework. In this way, although ad-hoc actions sit on top of the workflow framework and are independent, they may still cause a freeze (or a hold) of the dynamic workflow. In other words, an ad-hoc coordination may or may not cause a freeze of the underlying workflow instance. Further, it may cause a step to be incomplete as long as conversations are running. In this way, it may be regarded as a generic pre-condition for steps in a workflow definition. Thus, running ad-hoc conversations may impact the workflow by freezing it or making steps incomplete.

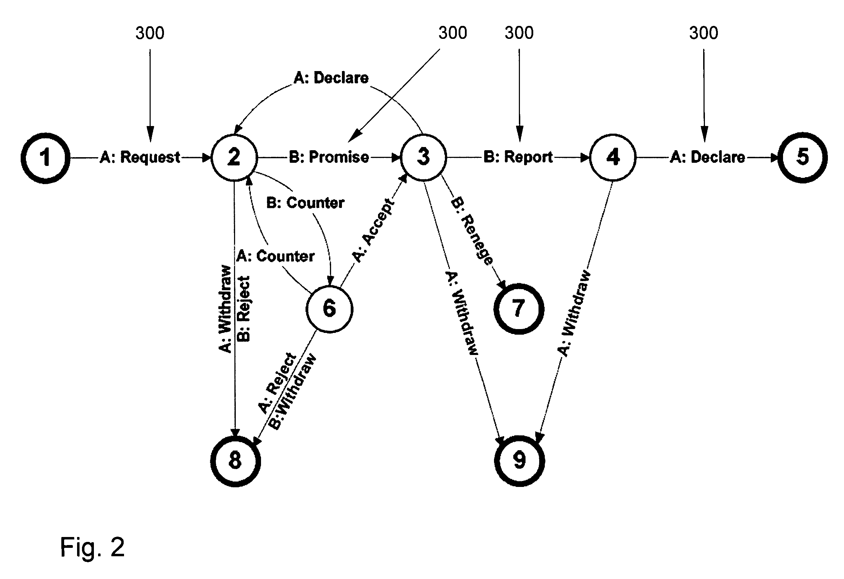

Figure 2 shows a schematic drawing illustrating the state transitions between two participants in a guided procedure including a plurality of actions. In particular, Figure 2 shows an interpersonal exception handling mechanism embedded in the guided procedure framework. The exception handling mechanism is derived by analyzing interpersonal exception handling mechanisms using a speech-act approach. The model shown in Figure 2 shows the interplay between the requests and answers in a conversation between an initial speak A and an initial listener B. The states are indicated as circles. The state transitions are indicated by the arrows linking the states. To identify each state a number has been allocated to it. The model assumes that the conversations follow the state-transition diagram depicted in Figure 2. Thus, at each step of the conversation there is only a limited set of possible types of actions 300, such as request, promise report declare, withdraw, reject, counter, accept and renege. Furthermore, each conversational step transforms the conversation into a different state, some of which end the conversation. Note that the "normal" conversation transforms conversation from the state (1) to state (5), which is a terminal state (shown through its thick boundaries). It is noted that conversations can also take a different avenues to the goal state (5), for example, 1 to 2 to 3 to 2 to 6 to 3 to 4 to 5, or even end without reaching an end where the initial request is fulfilled, such as (8) or (9), where the request is withdrawn or rejected, (7), where B reneges its fulfillment.

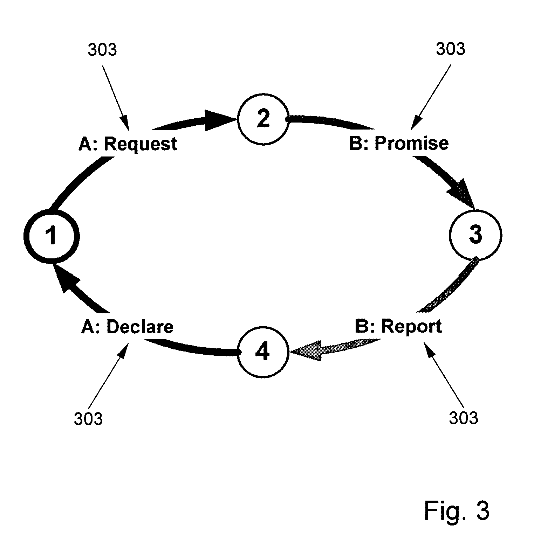

Figure 3 shows a schematic drawing illustrating a state transition diagram for a sub-work flow. Again in Figure 3, a participant A and B are involved in a procedure including actions. The actions 303 include a request action, a promise action, a report action and a declare action.

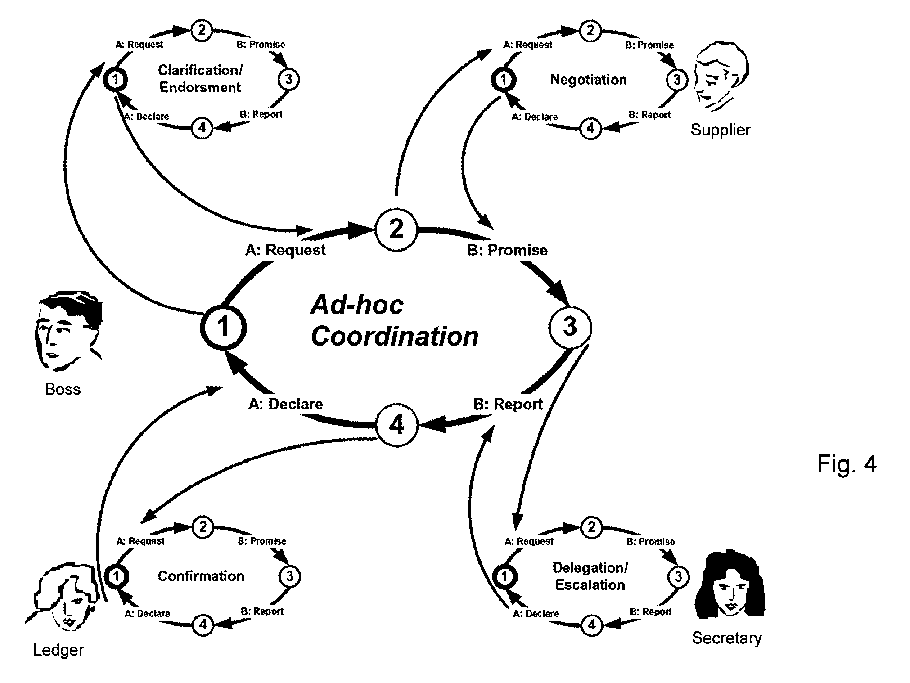

Figure 4 shows a schematic drawing illustrating a further state transition diagram for an action work flow model with sub-work flows, including the ad-hoc work flow of Figure 1. Figure 4 shows how an ad-hoc work flow can be modeled using state transitions. It has been found that the modeling of state transitions to derive an action definition is a useful analytically within the guided procedure framework. For example, it may be used to analyze the completeness of the general interpersonal exception handling mechanisms provided by one checking them against speech-act like interaction protocols, for example, like the one shown in Figure 4, or by identifying the additional exceptions that may occur according to the state-transition diagram shown in Figure 2. In the example shown in Figure 4, there are four participants, a manager, a secretary, a supplier and a ledger. In the example shown, each action includes only two of the participants A, B. In one action, the boss may be participant A, whilst in a further action, one of the other participants may be participant A. The designation of the participant depends on the action. In particular, according to an embodiment of the present invention, the following generic actions: request, clarification, endorsement, negotiation, promise, delegation, escalation, report, confirmation and declare are supported for process roles including, but not limited to requester, supplier, expert, assistant, approver.
With reference to Figure 2, the guided procedure includes the following non-exhaustive interpersonal exception handlers (system specific generic actions):
1. Request for approval: a generic accept/reject action providing the former steps deliverables for decision making.
2. Delegation: delegate one work item to someone else, keep trace of the delegation.
3. Escalation: escalate to another person.
4. Negotiate due date.
5. Request for contribution: generic action for asking for information.

Each of these interpersonal exception handlers may be seen as a speech-act type conversation within a guided procedure. A "request for approval", for example, is a standard request in the speech-act sense. The approval can be granted, ending the conversation in state (5) or rejected ending the conversation in state (8). It is interesting to note that a range of possible outcomes in the conversation are identified that are not straight forward deductions from the "Request for approval" exception. A request for approval may, for example, prompt a questioning of the reasoning behind the request by the receiver B (labeled as "B:counter" from state (2) to state (6) in Figure 2). The requester A may then react by withdrawing his original request or countering the argument made by B, continuing the conversation. It should be noted that the example given in Figure 3 is not a full analysis of the "request for approval". interpersonal exception. Nevertheless it shows how such an analysis may be conducted to model the state transitions to derive the action definition, and how such an analysis may be extended to the other exception types (system specific generic actions) as well.
This approach has two further advantages. Firstly, it provides users of the guided procedure framework with a conversational context when engaging in interpersonal exception handling. It may further help other users to understand the status of the exception handling when they see the conversational status. Secondly, it provides a basis which may be applied more broadly to exception handling. For example, it may be applied to other requests that may typically arise in a daily business activity besides the ones mentioned above. For example, a request to reserve a resource, such as a meeting room, for a particular purpose. Another type of exception may arise through the incompatibility of a resource with the requirement. This may raise a request for definition of the goal, for example, by relaxing the requested education of a person to be hired, etc.

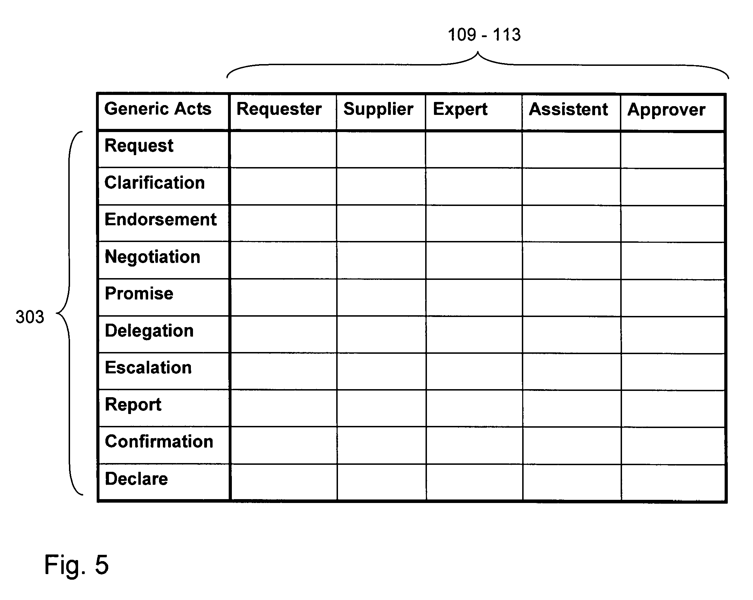

Figure 5 lists the candidates for ad-hoc coordination actions derived from the act-speech diagram shown in Figure 4. As mentioned above, an ad-hoc coordination action links two or more roles in a context into an ad-hoc (meta) conversation about the business situation. In particular, Figure 5 shows a plurality of generic acts, listed in a the first column, including coordination actions 303. The actions include, but are not limited to, request, clarification, endorsement, negotiation, promise, delegation, escalation, report, confirmation and declare. The participants 109-113 are listed in the first row, include, but are not limited to Requester, Supplier, Expert, Assistant, Approver.

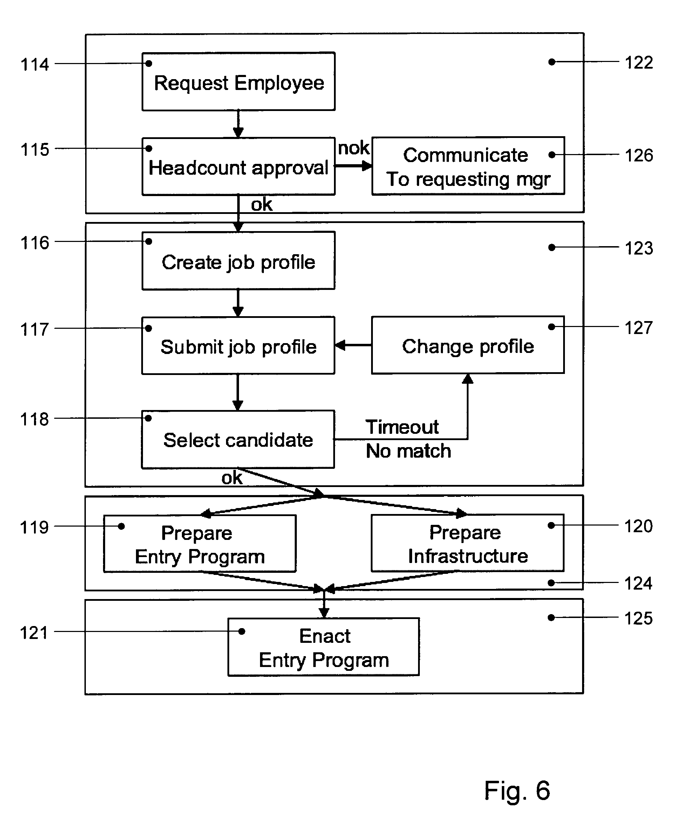

Figure 6 shows a schematic drawing illustrating an action pattern including predefined exception handling. In order to illustrate the use of action patterns, a simplified version of an employee hiring process is given. This process it used to illustrate ad-hoc workflow issues and exception handling methods. The process includes the steps request employee 114, headcount approval 115, create job profile 116, submit job profile 117, select candidate 118, prepare entry program 119, prepare infrastructure 120 and enact entry program 121. The process can be mapped to the guide procedure framework as follows:
The owner of the process is mapped to the responsible HR manager and the initiator is mapped to the manager requesting an employee. Additional roles needed during the runtime of the guided procedure are: boss of initiator, HR employee, team members, candidates. The guided procedure comprises four phases: the request phase 122, selection phase 123, prepare phase 124 and employee introduction phase 125. At design time, the following exceptions are identified: headcount approval might fail, select candidate might fail or timeout (long duration). In order to avoid these exceptions, the process includes exception handlers. In particular, an action to communicate to requesting manager 126 if the headcount is not approved and a change profile action 127 if there is a time out or no match for the selection of the candidate. The process shown in Figure 6 is implemented in the guided procedure framework as follows: the submit job profile step is included in the same phase as the select candidate step in order to avoid reactivation of an already finished phase when the job profiled has to be changed. The process model shown in Figure 6 does not cover any informal exceptions and communication needs between contributors to this process. In a business situation, there is often not a simple approve vs not approve but first there is a request for clarification why the manager believes that the candidate for employment is a good fit. There can also be a request for more information if the information provided to the employer is insufficient. There can be negotiation taking place between line manager and HR generalist about appropriate salary level or job title. To address these ad-hoc conversations, the present invention provides, in one embodiment, an additional layer on top of this process model that supports the execution of predefined ad-hoc actions that enable some kind of conversation thread between roles to enable this ad-hoc coordination need.

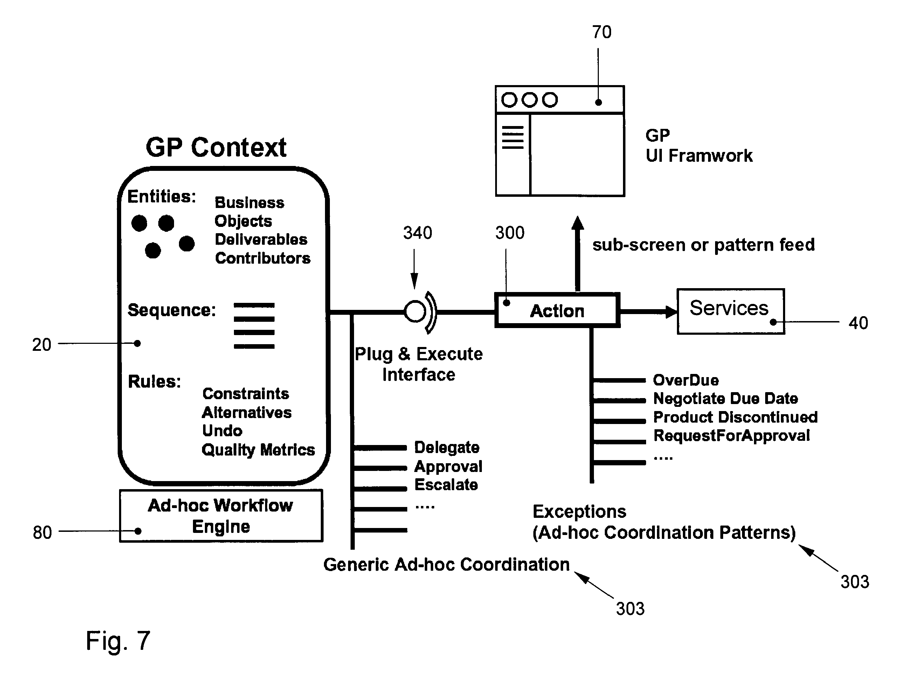

Figure 7 shows a schematic drawing of an action and its connection to a specific work context. An action 300 may include ad-hoc actions, as discussed above. Ad-hoc actions may be generic. Alternatively, they may be specific to a particular action. Ad-hoc actions form ad-hoc workflow. As described, the present invention is concerned with the tracking of ad-hoc actions using an ad-hoc action frame work on a context instance. The ad-hoc framework may be implemented by an ad-hoc workflow engine 80.
An action 300, for example, an ad-hoc action, is instantiated providing an interface 340 to a work context 20. The action 300 activates one or more generic services, preferably web services, wherein a predefined number of data objects are handled in the work context 20. The action 300 may be designed to have a plug & execute interface 340 which may be described as a generic data-interface through which data exchange is possible from the context to the action. In particular, actions are atomic tasks or particular instances of work that a user performs in a given work context 20 or steps that users must execute in a process.

Some generic ad-hoc coordination actions 303 include escalation, request for review, or request for approval and may also be referred to as exception handling actions, or exception handlers per se. The present invention, is in particular, concerned with such actions. System specific generic actions, as exemplified above, typically involve a plurality of participants. For example, in the delegation action, a task may be delegated from one participant to a second participant. Several participants may also be involved. The ad-hoc nature of the activity increases as the number of participants increases, since the larger the number of participants the larger the number of possible outcomes and possible processes that lead to the outcomes.
In the user interface 70 a Contextual Action Bar may be provided which supports the display of response options provided by the work item. Those are typically workflow options like "yes", "no", "reject", "reply", "delegate". There are also other task management options provided such as "prioritize", "add to My Lists", "Open related work context", transform into a procedure or ad-hoc Activity, and so forth. System specific generic actions in terms of ad-hoc activity are described in detail below.

Typically in a Guided Procedure project processes are modelled by integrating existing and newly implemented services into a coherent procedure. In this way the workflow as experienced by this user; whether the user is the owner of the process, or at least this part of it; the work objects managed by the process. Guided Procedures support collaboration amongst multiple users all working towards a common goal, each contributing their share. UI elements of the Guided Procedure allow for navigation through the process, indicate the status of the process, and provide different views on the process.

The invention may also be embodied in a computer system. A computer (system) includes any type of programmable apparatus such as a desktop computer, a personal digital assistant, a (mobile) telephone or any other suitable type of programmable device. A computer (system) may include one or more of such devices communicatively connected in a suitable manner. To provide for interaction with a user, a computer system can be used having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.
It should be noted that the above-mentioned embodiments illustrate rather than limit the invention, and that those skilled in the art will be able to design alternatives without departing from the scope of the appended claims. For example, the computational aspects described here can be implemented in digital electronic circuitry, or in computer hardware, firmware, software, or in combinations of them.

## Claims

1. A computer implemented method for implementing an ad-hoc coordination action framework, extending on a business process framework,
the method including:
- providing a plurality of ad-hoc coordination actions as generic callable services in a work context;
- implementing the plurality of ad-hoc actions as templates defining the state transitions between roles participating at the work context, and
- enabling the work context to track the state transitions as a conversation thread.

2. A method according to claim 1, including providing the ad-hoc action framework, as an additional layer, in a business application.

3. A method according to claim 1 or claim 2, including tracking the conversation thread in real time.

4. A method according to claim 1, including modelling the plurality of ad-hoc actions on the basis of one or more state transitions between one or more participants in the one or more actions, respectively

5. A method according to claim 4, including persisting the ad-hoc actions between the one or more participants in the work context.

6. A method according to claim 5, wherein the ad-hoc actions are comprised in a conversation between the one or more participants.

7. A method according to claim 4, including instantiating an ad-hoc conversation including one or more ad-hoc actions between one or more participants within the work context.

8. A method according to claim 1, wherein at least one of the plurality of ad-hoc actions are at least one of a generic ad-hoc action and an action specific ad-hoc action.

9. A method according to claim 1, wherein at least one of the plurality of ad-hoc actions are a definition of a coordination action between a plurality of participants, wherein the coordination action has a particular type.

10. A method according to claim 9, wherein at least one of the plurality of ad-hoc actions are modelled on a state transition model including substantially all state transitions for the particular type of coordination action.

11. A method according to claim 10, including encapsulating the state transition models as long-running actions on a business application.

12. A method according to claim 11, including instantiating the long-running actions within an instantiated context of a business application.

13. A method according to claim 12, including, when launching the long-running actions, combining the long-running actions with an existing contextual role.

14. A method according to claim 11, including, when launching the long-running actions, adding a new participant to the instantiated context.

15. A method according to claim 1, including pre-enabling a combination of at least one of the plurality of ad-hoc actions with a particular instantiated context in accordance with a common work practice.

16. A method according to claim 1, wherein the plurality of ad-hoc actions include a definition of at least one a request action, a promise action and a negotiate action.

17. A method according to claim 2, wherein the additional layer is modelled by a plurality of ad-hoc coordination actions on the basis of one or more state transitions models that define the ad-hoc interaction between a plurality of participants in a given context.

18. A method according to claim 1, wherein the execution of one or more of the plurality of ad-hoc actions freezes a work flow instance in the business process framework.

19. A user interface comprising means operable to perform the method of any of claims 1-18.

20. A computer readable storage medium storing a program which when run on a computer controls the computer to perform the method of any of claims 1-18.
